# EUROPEAN PATENT APPLICATION

(11) **EP 4 075 780 A1**
(43) Date of publication of application: **19.10.2022**
(21) Application number: 20737330.9
(22) Date of filing: 07.01.2020
(51) Int. Cl.: H04N 5/225, H04N 5/232, H04M 1/02

(54) **DISPLAY APPARATUS, ELECTRONIC DEVICE AND MOBILE TERMINAL**

(30) Priority: 10.12.2019 CN 201911256047
(71) Applicant: Wuhan China Star Optoelectronics Semiconductor Display Technology Co., Ltd., Wuhan, Hubei 430079 (CN)
(72) Inventor: ZHANG, Zhuo, Wuhan, Hubei 430079 (CN); WANG, Fang, Wuhan, Hubei 430079 (CN); HAN, Wen, Wuhan, Hubei 430079 (CN); FENG, Zikang, Wuhan, Hubei 430079 (CN); CAO, Huan, Wuhan, Hubei 430079 (CN)
(74) Representative: Herrero & Asociados, S.L.
(86) International application number: PCT/CN2020/070601
(87) International publication number: WO 2021/114448

(57) **Abstract**

The present application provides a display device, an electronic device, and a mobile terminal. The display device, the electronic device, and the mobile terminal all include a main body, a display component, and a separable camera component. The main body includes the display component. The main body is provided with a receiving groove. The receiving groove receives the separable camera component. The separable camera component is in communication with the main body. The separable camera component and the main body have a separable design.

## Description

### TECHNICAL FIELD

The present application is related to the field of display technology, and specifically, to a display device, an electronic device, and a mobile terminal.

### BACKGROUND

Flexible organic light-emitting diode (OLED) display devices have good bendable performance and are lighter. Mobile terminals which are equipped with OLED display devices become more and more popular. Full-screen mobile phones have appeared on the market. One of the full-screen mobile phones adopts a lifting camera design which hides a camera inside a case. This design does not require camera under panel (CUP) technology; thus, its yield is higher. However, a direction of the lifting camera is fixed, which can only be used for photographing in one direction, so it is very inflexible. An internal lifting motor increases power consumption of a product.

Therefore, the prior art has defects and needs to be urgently improved.

### TECHNICAL PROBLEMS

The present application provides a display device, an electronic device, and a mobile terminal to solve problems that limitations of positions and photographing angles of the present display devices lead poor user experience and large power consumption of products.

### SUMMARY

In order to solve the above problems, the present application provides technical solutions as follows.

The present application provides a display device, including a device main body, a display component, and a separable camera component.

The device main body includes the display component. The device main body is provided with a receiving groove. The receiving groove receives the separable camera component.

The separable camera component is in communication with the device main body. The separable camera component is moveable out of the receiving groove to be separated from the device main body.

In the display device of the present application, the separable camera component is wirelessly connected to the device main body through a wireless module.

In the display device of the present application, the separable camera component is wiredly connected to the device main body through a wired connection component.

In the display device of the present application, the device main body includes a housing and a system motherboard.

The system motherboard is disposed in the housing. The separable camera component is electrically connected to the system motherboard through the wired connection component. The system motherboard is electrically connected to the display component.

The receiving groove is disposed on the housing. The receiving groove receives the wired connection component and the separable camera component.

The separable camera component is configured to extend from or be received in the receiving groove through the wired connection component, and is configured to be moved and/or rotated in a movable region of the wired connection component.

In the display device of the present application, the separable camera component is configured to change a position and/or a photographing angle in the movable region of the wired connection component by moving and/or twisting of the wired connection component.

In the display device of the present application, the wired connection component includes a connecting wire and a flexible support. An end of the connecting wire is electrically connected to the system motherboard, and another end of the connecting wire is electrically connected to the separable camera component. The flexible support wraps the connecting wire, or the connecting wire is attached on a surface of the flexible support.

In the display device of the present application, the flexible support is a flexible sliding tube. The connecting wire is wrapped in the flexible sliding tube. The separable camera component is configured to extend from or be received in the receiving groove by stretching the flexible sliding tube, and is configured to change a position and/or a photographing angle by bending and/or twisting of the flexible sliding tube.

In the display device of the present application, a stretch length of the flexible sliding tube is less than or equal to a length of the connecting wire.

In the display device of the present application, the wired connection component further includes a rotating mechanism. The flexible support is connected to the separable camera component through the rotating mechanism. The separable camera component is configured to in-situ rotate through the rotating mechanism.

In the display device of the present application, the receiving groove includes a first receiving portion receiving the separable camera component and a second receiving portion receiving the wired connection component. The second receiving portion is disposed between the first receiving portion and the system motherboard. The first receiving portion and the second receiving portion are communicated with each other. The wired connection component is configured to extend from or be received in the receiving groove through the first receiving portion.

The present application further provides an electronic device, including a device main body, a display component, and a separable camera component.

The device main body includes the display component. The device main body is provided with a receiving groove. The receiving groove receives the separable camera component.

The separable camera component is in communication with the device main body. The separable camera component is moveable out of the receiving groove to be separated from the device main body.

In the electronic device of the present application, the separable camera component is wirelessly connected to the device main body through a wireless module; or the separable camera component is wiredly connected to the device main body through a wired connection component.

In the electronic device of the present application, the device main body further includes a system motherboard. The receiving groove receives the wired connection component and the separable camera component.

The separable camera component is electrically connected to the system motherboard through the wired connection component. The system motherboard is electrically connected to the display component.

The separable camera component is configured to extend from or be received in the receiving groove through the wired connection component, and is configured to be moved and/or rotated in a movable region of the wired connection component.

In the electronic device of the present application, the separable camera component is configured to change a position and/or a photographing angle in the movable region of the wired connection component by moving and/or twisting of the wired connection component.

In the electronic device of the present application, the wired connection component includes a connecting wire and a flexible support. An end of the connecting wire is electrically connected to the system motherboard, and another end of the connecting wire is electrically connected to the separable camera component. The flexible support wraps the connecting wire, or the connecting wire is attached on a surface of the flexible support.

The present application further provides a mobile terminal, including a terminal main body, a display component, and a separable camera component.

The terminal main body includes the display component. The terminal main body is provided with a receiving groove. The receiving groove receives the separable camera component.

The separable camera component is in communication with the terminal main body. The separable camera component is moveable out of the receiving groove to be separated from the terminal main body.

In the mobile terminal of the present application, the separable camera component is wirelessly connected to the terminal main body through a wireless module; or the separable camera component is wiredly connected to the terminal main body through a wired connection component.

In the mobile terminal of the present application, the terminal main body further includes a system motherboard. The receiving groove receives the wired connection component and the separable camera component.

The separable camera component is electrically connected to the system motherboard through the wired connection component. The system motherboard is electrically connected to the display component.

The separable camera component is configured to extend from or be received in the receiving groove through the wired connection component, and is configured to be moved and/or rotated in a movable region of the wired connection component.

In the mobile terminal of the present application, the separable camera component is configured to change a position and/or a photographing angle in the movable region of the wired connection component by moving and/or twisting of the wired connection component.

In the mobile terminal of the present application, the wired connection component includes a connecting wire and a flexible support. An end of the connecting wire is electrically connected to the system motherboard, and another end of the connecting wire is electrically connected to the separable camera component. The flexible support wraps the connecting wire, or the connecting wire is attached on a surface of the flexible support.

### BENEFICIAL EFFECTS

The beneficial effects of the present application are: the present application changes conventional fixed camera components to separable camera components. The display devices/electronic devices/mobile terminals use wireless or wired connection to connect the separable camera components so that the separable camera components can be separated from the device main bodies. As a result, the problems of poor user experience and large power consumption of products caused by limitations of positions and photographing angles of the present display devices are solved.

### DESCRIPTION OF DRAWINGS

The following describes specific embodiments of the present application in detail with reference to the accompanying drawings, which will make technical solutions and other beneficial effects of the present application obvious.
FIG. 1 is a structural diagram of a first type of a display device provided by the present application.
FIG. 2 is a partial view of an internal diagram of the first type of a display device provided by the present application.
FIG. 3 is an assembly diagram of a separable camera component and a wired connection component provided by the present application.
FIG. 4 is a structural diagram of a second type of the display device provided by the present application.
FIG. 5 is a schematic diagram of a display device provided by a first embodiment of the present application in a small-sized display state.
FIG. 6 is a schematic diagram of the display device provided by the first embodiment of the present application in a large-sized display state.
FIG. 7 is a schematic diagram of a display device provided by a second embodiment of the present application in an expanded state.
FIG. 8 is a schematic diagram of a scenario where an electronic device provided by the present application is applied to an internal inspection of an instrument.
FIG. 9 is a partial view of a cross-sectional diagram of a mobile terminal provided by the present application.

### DETAILED DESCRIPTION

The technical solution of the present application embodiment will be clarified and completely described with reference accompanying drawings in embodiments of the present application embodiment. Obviously, the present application described parts of embodiments instead of all of the embodiments. Based on the embodiments of the present application, other embodiments which can be obtained by a skilled in the art without creative efforts fall into the protected scope of the of the present application.

In the description of the present application, it should be noted that the terms "center", "portrait", "transverse", "length", "width", "thickness", "upper", "lower", "front", The directions or positional relationships indicated by "back", "left", "right", "vertical", "horizontal", "top", "bottom", "inside", "outside", etc. are based on the drawings. The orientation or positional relationship is only for the convenience of describing the present application and simplifying the description, and does not indicate or imply that the device or element referred to must have a specific orientation, structure and operation in a specific orientation, and should not be viewed as limitations of the present application. In addition, terms "first" and "second" are used for descriptive purposes only, and cannot be understood as indicating or implying relative importance or implicitly indicating the number of technical features indicated. Therefore, the features defined as "first" and "second" may explicitly or implicitly include one or more of the features. In the description of the present application, the meaning of "multiple" is two or more, unless specifically defined otherwise.

In the description of the present application, it should be noted that terms "installation", "link", and "connection" should be understood broadly, unless explicitly stated and limited otherwise. For example, connection can be fixed connection or removable or integral connection, can be mechanical connection, electrical connection or mutual communication, can be direct connection or indirect connection through an intermedium, or can be the internal communication between two components or the mutual reaction between two components. For a skilled person in the art, the specific meanings of the above terms of the present application can be understood according to practical situations.

In the present application, unless explicitly stated and limited, the first feature is "on" or "under" the second feature may refer to that the first feature and second feature are directly contact, or are indirectly through another feature between them. Moreover, the first feature is "above", "upon", and "upper" the second feature, including that the first feature is directly above and obliquely above the second feature refers to that t the first feature is higher in level than the second feature. The first feature is "below", "down", and "under" of the second feature refers to that the first feature is directly below or obliquely below the second feature, or merely refers to that the first feature is horizontally lower than the second feature. In the present application, "/" means "or".

The following application provides many different embodiments or examples for implementing different structures of the present application. To simplify the application of the present application, the components and settings of specific examples are described below. Obviously, these are merely examples instead of limitation of the present application. Furthermore, the present application may repeat reference numbers and/or reference letters in different examples, and such repetition is for the purpose of simplicity and clarity, and does not indicate the relationship between the various embodiments and/or settings.

The present application focus on technical problems that limitations of positions and photographing angles of the present display devices lead poor user experience and large power consumption of products. This embodiment can solve these defects.

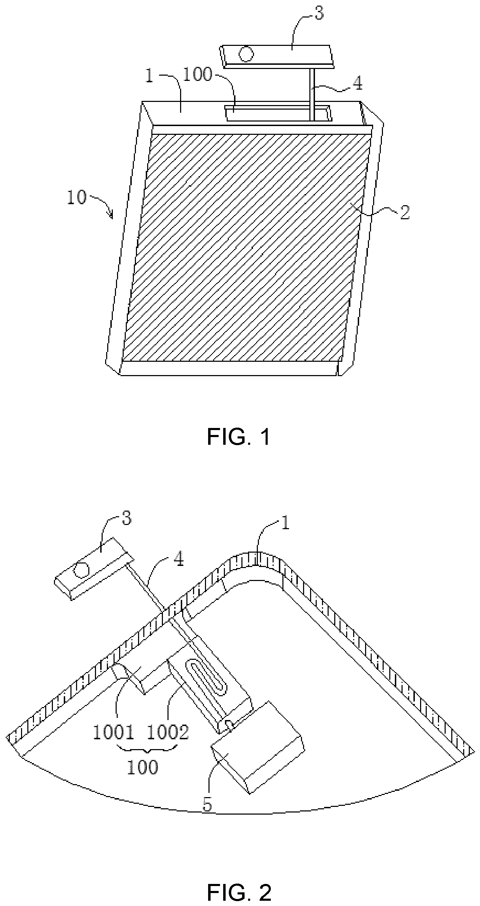

Please refer to FIGs. 1 and 2. FIG. 1 is a structural diagram of a first type of a display device provided by the present application. FIG. 2 is a partial view of an internal diagram of the first type of the display device provided by the present application. The present application provides a device main body 10, a display component 2, a separable camera component 3, and a wired connection component 4. The device main body 10 includes a housing 1, a system motherboard 5, and a power supply device. The device main body 10 includes the display component 2. The system motherboard 5 is disposed in the housing 1 and is electrically connected to the display component 2. The separable camera component 3 is mechanically connected to the housing 1 through the wired connection component 4. The separable camera component 3 is electrically connected to the system motherboard 5 through the wired connection component 4.

The housing 1 is provided with a receiving groove 100. The receiving groove 100 receives the wired connection component 4 and the separable camera component 3. The separable camera component 3 is configured to extend from or be received in the receiving groove 100 through the wired connection component 4. An opening of the receiving groove 100 needs to be disposed away from a region on an outer surface of the housing 1 covered by the display component 2, so as to prevent an extension of the wired connection component 4 and the separable camera component 3 from an affecting of the opening of the receiving groove 100 covered by the display component 2.

The receiving groove 100 includes a first receiving portion 1001 receiving the separable camera component 3 and a second receiving portion 1002 receiving the wired connection component 4. The first receiving portion 1001 and the second receiving portion 1002 are communicated with each other. The second receiving portion 1002 is disposed between the first receiving portion 1001 and the system motherboard 5. The wired connection component 4 is configured to extend from or be received in the receiving groove 100 through the first receiving portion 1001.

A shape of the first receiving portion 1001 matches a shape of the separable camera component 3. Size of the first receiving portion 1001 is slightly larger than size of the separable camera component 3, so the separable camera component 3 can be smoothly embedded in the first receiving portion 1001.

A shape and size of the second receiving portion 1002 are not specifically required, as long as it can receive the wired connection component 4. In an embodiment of the present application, the second receiving portion 1002 may not be provided, but the wired connection component 4 can be directly received in an internal storage space in the housing 1 through a through hole in the first receiving portion 1001. In addition, the internal storage space in the housing 1 is further provided with other devices such as a battery, which is not limited herein.

In an embodiment of the present application, the second receiving portion 1002 is provided with a guiding structure (not shown), which can guide the wired connection component 4 of the second receiving portion 102 during receiving the wired connection component 4, so as to arrange it neatly to prevent a use of the separable camera component 3 from affecting by "knotting" and "stuck" of the wired connection component 4.

When the separable camera component 3 and the wired connection component 4 are received in the receiving groove 100, the separable camera component 3 can be engaged with the receiving groove 100 to fix the separable camera component 3 on the housing 1. The separable camera component 3 can fill a gap of a surface of the housing 1 formed by the receiving groove 100. Meanwhile, the wired connection component 4 is hidden in a cavity surround by the separable camera component 3 and the receiving groove 100. Because the separable camera component 3 and the wired connection component 4 are embedded in the receiving groove 100, they do not occupy a display region and an extra space of the display device.

In this way, the separable camera component 3 is used to photograph an object facing a surface of the separable camera component 3 contacting outside, which means that a single-direction and a fixed-angle photograph at a fixed position is achieved without moving the display device; or the separable camera component 3 cannot perform photographing.

When the separable camera component 3 and the wired connection component 4 extend from the receiving groove 100, the separable camera component 3 can be separated from the housing 1 and moved and/or rotated in a movable region of the wired connection component 4 by moving and/or twisting of the wired connection component 4, that is, the separable camera component 3 changes a position and/or a photographing angle in the movable region of the wired connection component 4.

The wired connection component 4 can be moved relative to the housing 1 in its movable region, and the wired connection component 4 itself can also realize twisting. The separable camera component 3 can be moved and rotated relative to the housing 1 under a traction of the wired connection component 4.

Specifically, when the wired connection component 4 is moved relative to the housing 1, the position of the separable camera component 3 related to the housing 1 changes. When the wired connection component 4 is twisted relative to the housing 1, the photographing angle of the separable camera component 3 changes, which can realize 360-degree free rotation around a certain direction. When the wired connection component 4 is moved and twisted relative to the housing 1, the separable camera component 3 realize an all-round photographing without any blind spots.

The wired connection component 4 includes a connecting wire and a flexible support. An end of the connecting wire is electrically connected to the system motherboard 5, and another end of the connecting wire is electrically connected to the separable camera component 3. The flexible support wraps the connecting wire, or the connecting wire is attached on a surface of the flexible support.

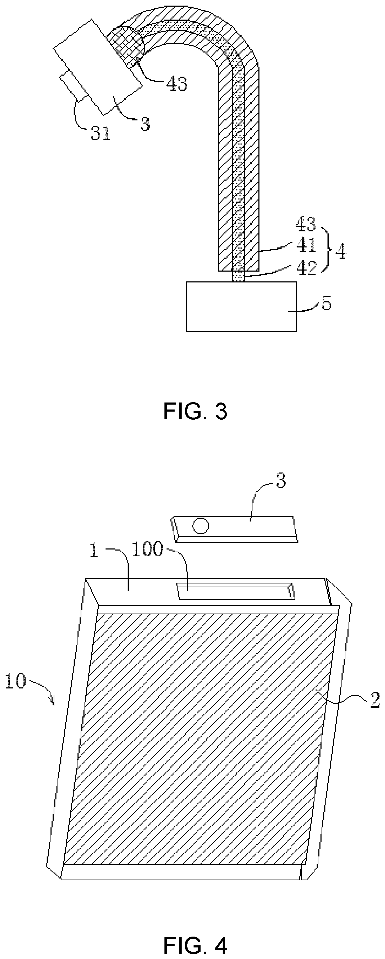

Specifically, as shown in FIG. 3, which is an assembly diagram of the separable camera component and the wired connection component provided by the present application, the separable camera component 3 includes a camera 31. The flexible support of the wired connection component 4 is a flexible sliding tube 41. The connecting wire 42 is wrapped in the flexible sliding tube 41. The connecting wire 42 is wrapped with an insulating and protective tape such as an acetate tape. The flexible sliding tube 41 can be stretched, bent, and twisted and has protection and shaping functions, which can be bent/moved arbitrarily in its movable region and maintain a certain state. The flexible sliding tube 41 guides and includes the connecting wire 42, and it can be a flexible tube or a sleeve having shaping and supporting functions, which is not limited herein.

A stretch length of the flexible sliding tube 41 is less than or equal to a length of the connecting wire 42 to prevent the connecting wire 42 from a risk of breakage due to a length of the connecting wire 42 being too short while stretching the flexible sliding tube 41.

In an embodiment, the stretch length of the flexible sliding tube 41 ranges from 1 to 100 mm. The length of the connecting wire 42 ranges from 1 to 500 mm.

An end of the flexible sliding tube 41 is fixed to the housing in the receiving groove, and another end thereof is fixed to the separable camera component 3. The separable camera component 3 is configured to extend from or be received in the receiving groove by stretching the flexible sliding tube 41, and is configured to change a position and/or a photographing angle by bending and/or twisting of the flexible sliding tube 41.

In another embodiment, the wired connection component 4 further includes a rotating mechanism 43. As shown in the figure, the flexible sliding tube 41 is hinged with the separable camera component 3 through the rotating mechanism 43. The separable camera component 3 is configured to in-situ rotate through the rotating mechanism 43. The rotating mechanism 43 includes but is not limited to a ball hinge mechanism.

As shown in FIG. 4, which is a structural diagram of a second type of the display device provided by the present application, the display device includes a device main body 10, a display component 2, and a separable camera component 3. The device main body 10 includes a housing 1 and a power supply device. The housing 1 is provided with a receiving groove 100. The receiving groove 100 receives the separable camera component 3.

The device main body 10 includes the display component 2. The separable camera component 3 is wirelessly connected to the device main body 10. Specifically, the separable camera component 3 is wirelessly connected to the device main body 10 through a wireless module (not shown).

The wireless module can be wireless communication module such as WIFI, Bluetooth, or zigbee, which is not limited herein.

When the separable camera component 3 is moved out of the receiving groove 100, it can be separated from the device main body 10, and the separable camera component 3 can be placed arbitrarily within a coverage of wireless communication.

The display device provided by the present application disposes the wired connection component between the system motherboard and the separable camera component, or adopts a wireless connection between the separable camera component and the device main body to replace a fixed camera component of a traditional display device by the separable camera component, which is flexible to use. This solves problems that limitations of positions and photographing angles of the present display devices lead poor user experience and large power consumption of products.

The separable camera component of the present application can be applied to various types of display devices. A wired connection is taken as an example, and the display device of the present application is described in detail below with reference to specific embodiments.

### First embodiment

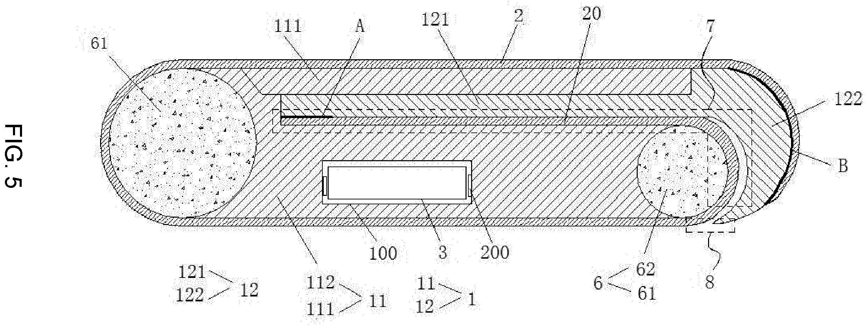

This embodiment disposes the separable camera component and the wired connection component on an extendable display device. As shown in FIG. 5, which is a schematic diagram of a display device provided by the first embodiment of the present application in a small-sized display state. The display device includes a housing 1, a display component 2, a separable camera component 3, a wired connection component 4 (as shown in FIG. 2), a system motherboard 5 (as shown in FIG. 5), and a rotating component 6. The housing 1 includes a first housing 11 and a second housing 12, which are opposite to each other. The first housing 11 includes a first grid structure 111 and a first housing main body 112. The second housing 12 includes a second grid structure 121 and a second housing main body 122. The first grid structure 111 and the second grid structure 121 are disposed in a staggered manner to compensate each other. The first casing 11 and the second casing 12 realize relative movement through mutual compensation of the first grid structure 111 and the second grid structure 121.

The rotating component 6 includes a first pulley 61 and a second pulley 62, whose axial directions are perpendicular to a moving direction of the first housing 11 and the second housing 12. The first grid structure 111 and the second grid structure 121 both form a gap with the first housing main body 112. The first housing 11 and the second housing 12 cooperate to form a receiving cavity 7. An opening channel 8 is formed between the first housing main body 112 and the second housing main body 122. The display component 2 bypasses an upper surface of the housing 1 and lower surfaces of the first pulley 61 and the housing 1 from a side of the opening channel 8 away from the second pulley 62, and then extends to the receiving cavity 7 from an opposite side of the opening channel 8.

A side wall of the first housing main body 112 is provided with a receiving groove 100. The system motherboard is disposed inside the first housing main body 112. The separable camera component 3 can be received in the receiving groove 100. The system motherboard is electrically connected to the separable camera component 3 through the wired connection component. The separable camera component 3 can extend or be received in the receiving groove 100 by stretching the wired connection component, which can be shown in FIG. 2. FIG. 5 shows a state that the separable camera component 3 and the wired connection component are received in the receiving groove 100.

In this embodiment, the housing 1 is provided with a buckle 200 at an opening of the receiving groove 100. The buckle 200 is in an opened state when the separable camera component 3 extends out of the receiving groove 100. The buckle 200 is in a closed state when the separable camera component 3 is received in the receiving groove 100. Of course, it is not limited to this, the separable camera component 3 can also be fixed to the housing 1 through other ways.

In this embodiment, the display component 2 includes an extension portion 20 in the receiving cavity 7. An end of the display component 2 provided with the extension portion 20 is bonded to an end of the second grid structure 121 close to the first pulley 61 through a first bonding position A. An opposite end of the display component 2 is bonded to a side surface of the second housing main body 122 away from the second pulley 62 through the second bonding position B.

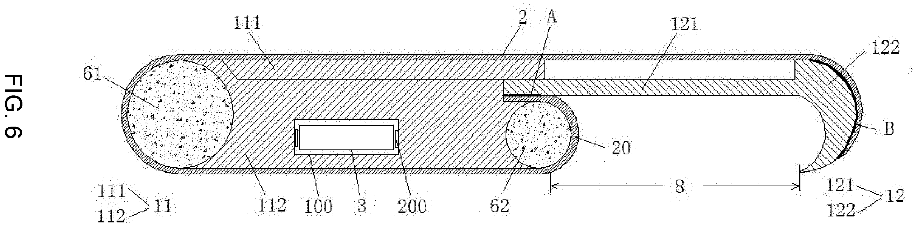

When the second housing 12 is moved away from the first housing 11, the extension portion 20 of the display component 2 is sent out of the receiving cavity 7 under a force (pushing force) of the second housing 12 at the first bonding position A due to a movement of the second housing 12. Meanwhile, an opposite end of the display component 2 is pulled out under a force (tension force) at the second bonding position B due to the movement of the second housing 12. This thus realizes a transition of the display device from the small-sized display state to a large-size display state, as shown in FIG. 6. A transition of the display device from the large-size display state to the smallsize display state is a reverse of the above description, which is not repeated herein.

The separable camera component 3 can extend or be received in the receiving groove 100 by stretching the wired connection component, and can be moved and/or rotated in a movable region of the wired connection component 4, which realizes a flexible change of a position and a photographing angle, so as to solve problems that limitations of positions and photographing angles of the present display devices lead poor user experience and large power consumption of products.

The separable camera component 3 can also be disposed on the display device of this embodiment through a wireless connection, which is not repeated herein.

### Second embodiment

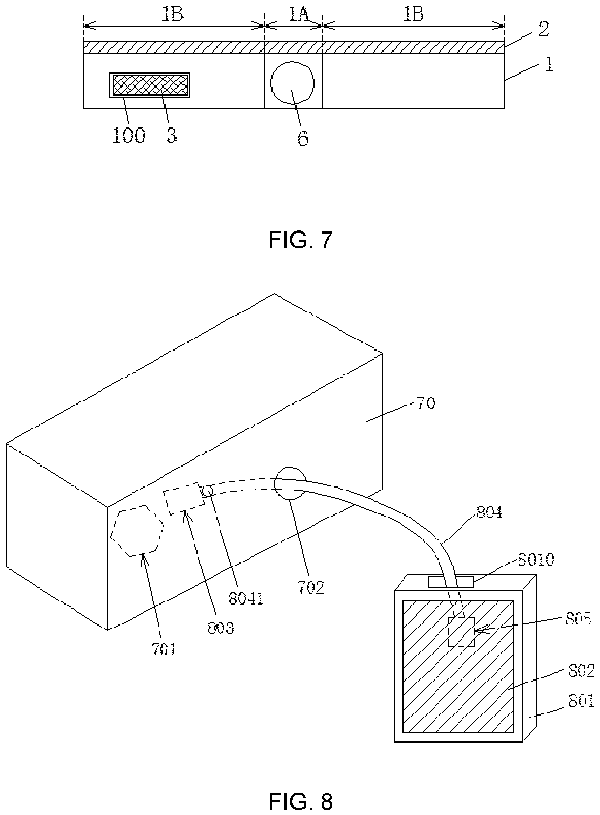

This embodiment is similar to the first embodiment described above, except that this embodiment disposes the separable camera component and the wired connection component on a foldable display device, as shown in FIG. 7, which is a schematic diagram of a display device provided by the second embodiment of the present application in an expanded state. The display device includes a housing 1, a display component 2, a separable camera component 3, a wired connection component 4 (as shown in FIG. 2), a system motherboard 5 (as shown in FIG. 2), and a rotating component 6.

The display device includes a bending portion 1A and non-bending portions 1B on two sides of the bending portion 1A. The non-bending portions 1B can be folded inward or outward through the bending portion 1A. The display component 2 is disposed on a side surface of the housing 1. A side wall of the housing 1 is provided with a receiving groove 100. The receiving groove 100 is correspondingly disposed on the non-bending portion 1B.

The separable camera component 3 can be received in the receiving groove 100. The system motherboard is electrically connected to the separable camera component 3 through the wired connection component. The separable camera component 3 can extend or be received in the receiving groove 100 by stretching the wired connection component, which can be shown in FIG. 2. The figure of this embodiment shows a state that the separable camera component 3 and the wired connection component are received in the receiving groove 100.

The separable camera component 3 can extend or be received in the receiving groove 100 by stretching the wired connection component, and can be moved and/or rotated in a movable region of the wired connection component 4, which realizes a flexible change of a position and a photographing angle, so as to solve problems that limitations of positions and photographing angles of the present display devices lead poor user experience and large power consumption of products.

The separable camera component 3 can also be disposed on the display device of this embodiment through a wireless connection, which is not repeated herein.

The present application further provides an electronic device, referring to FIG. 8, which includes a device main body 801, a display component 802, and a separable camera component 803. The device main body 801 includes the display component 802. The device main body 801 is provided with a receiving groove 8010. The receiving groove 8010 receives the separable camera component 803. The separable camera component 803 is in communication with the device main body 801. The separable camera component 803 is moveable out of the receiving groove 8010 to be separated from the device main body 801.

The separable camera component 803 is wirelessly connected to the device main body 801 through a wireless module (not shown), or the separable camera component 803 is wiredly connected to the device main body 801 through a wired connection component.

The wireless module can be wireless communication module such as WIFI, Bluetooth, or zigbee, which is not limited herein.

When the separable camera component 803 is moved out of the receiving groove 8010, it can be separated from the device main body 801, and the separable camera component 803 can be placed arbitrarily within a coverage of wireless communication.

The following takes a wired connection between the separable camera component 803 and the device main body 801 as an example for description.

The electronic device further includes a wired connection component 804 and a system motherboard 805. The receiving groove 8010 receives the wired connection component 804 and the separable camera component 803.

The separable camera component 803 is electrically connected to the system motherboard 805 through the wired connection component 804. The system motherboard 805 is electrically connected to the display component 802.

The separable camera component 803 is configured to extend from or be received in the receiving groove 8010 through the wired connection component 804, and is configured to be moved and/or rotated in a movable region of the wired connection component 804.

Specifically, the separable camera component 803 is configured to change a position and/or a photographing angle in the movable region of the wired connection component 804 by moving and/or twisting of the wired connection component 804.

The wired connection component 804 includes a connecting wire and a flexible support. An end of the connecting wire is electrically connected to the system motherboard 805, and another end of the connecting wire is electrically connected to the separable camera component 803. The flexible support wraps the connecting wire, or the connecting wire is attached on a surface of the flexible support.

The wired connection component 804 and the separable camera component 803 are same as/similar to the wired connection component and the separable camera component in the display device of the present application. A disposing method of the wired connection component 804 and the separable camera component 803 on the electronic device is same as/similar to a disposing method on the display device. For structures of the wired connection component 804 and the separable camera component 803, a connecting method thereof, and a connecting method of the wired connection component 804 and the device main body 801, please refer to the description in the above display device, which is not repeated herein.

The electronic device provided by the present application disposes the wired connection component between the system motherboard and the separable camera component, or adopts a wireless connection between the separable camera component and the device main body to replace a fixed camera component of a traditional electronic device by the separable camera component, which is flexible to use. This solves problems that limitations of positions and photographing angles of the present electronic devices lead poor user experience and large power consumption of products.

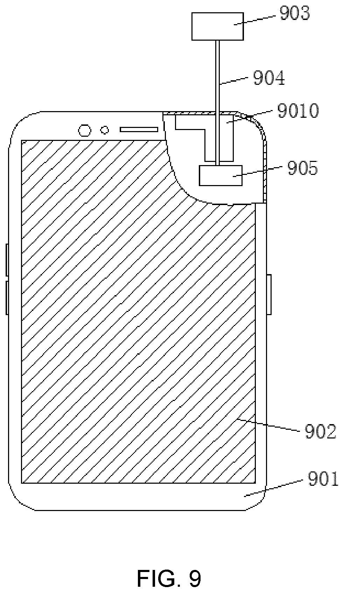

The present application further provides a mobile terminal, referring to FIG. 9, which includes a terminal main body 901, a display component 902, and a separable camera component 903. The terminal main body 901 includes the display component 902. The terminal main body 901 is provided with a receiving groove 9010. The receiving groove 8010 receives the separable camera component 903. The separable camera component 903 is in communication with the terminal main body 901. The separable camera component 903 is moveable out of the receiving groove 9010 to be separated from the terminal main body 901.

The separable camera component 903 is wirelessly connected to the terminal main body 901 through a wireless module (not shown), or the separable camera component 903 is wiredly connected to the terminal main body 901 through a wired connection component.

The wireless module can be wireless communication module such as WIFI, Bluetooth, or zigbee, which is not limited herein.

When the separable camera component 903 is moved out of the receiving groove 9010, it can be separated from the terminal main body 901, and the separable camera component 903 can be placed arbitrarily within a coverage of wireless communication.

The following takes a wired connection between the separable camera component 903 and the terminal main body 901 as an example for description.

As shown in FIG. 9, the mobile terminal further includes a wired connection component 904 and a system motherboard 905. The receiving groove 9010 receives the wired connection component 904 and the separable camera component 903.

The separable camera component 903 is electrically connected to the system motherboard 905 through the wired connection component 904. The system motherboard 905 is electrically connected to the display component 902.

The separable camera component 903 is configured to extend from or be received in the receiving groove 9010 through the wired connection component 904, and is configured to be moved and/or rotated in a movable region of the wired connection component 904.

In the mobile terminal of the present application, the separable camera component 903 is configured to change a position and/or a photographing angle in the movable region of the wired connection component 904 by moving and/or twisting of the wired connection component 904.

In the mobile terminal of the present application, the wired connection component 904 includes a connecting wire and a flexible support. An end of the connecting wire is electrically connected to the system motherboard 905, and another end of the connecting wire is electrically connected to the separable camera component 903. The flexible support wraps the connecting wire, or the connecting wire is attached on a surface of the flexible support.

The wired connection component 904 and the separable camera component 903 are same as/similar to the wired connection component and the separable camera component in the display device of the present application. A disposing method of the wired connection component 904 and the separable camera component 903 on the mobile terminal is same as/similar to a disposing method on the display device. For structures of the wired connection component 904 and the separable camera component 903, a connecting method thereof, and a connecting method of the wired connection component 904 and the terminal main body 901, please refer to the description in the above display device, which is not repeated herein.

In an embodiment, the wired connection component 904 is a multi-stable support member that can replace a selfie stick. When taking a selfie, the separable camera component 903 can be separated from the terminal main body 901, and the support member can be used to adjust an angle of a selfie.

The mobile terminal provided by the present application disposes the wired connection component between the system motherboard and the separable camera component, or adopts a wireless connection between the separable camera component and the terminal main body to replace a fixed camera component of a traditional mobile terminal by the separable camera component, which is flexible to use. This solves problems that limitations of positions and photographing angles of the present mobile terminals lead poor user experience and large power consumption of products.

The separable camera component of the present application can be disposed on mobile terminals such as mobile phones and tablets, as well as other electronic devices and wearable devices, which is not limited herein.

The display device, the electronic device, and the mobile terminal of the present application can be applied to a variety of different environments and places such as field surveys, construction sites, medical sites, and the like. The electronic device is taken as an example for description.

As shown in FIG. 8, which is a schematic diagram of a scenario where the electronic device provided by the present application is applied to an internal inspection of an instrument. There is a component 701 to be inspected in the instrument 70. The instrument 70 includes a small hole 702 (or a gap) on its outer shell. The component 701 to be inspected cannot be observed through the small hole 702 (or is not convenient for observation). Generally, the electronic device used for inspection cannot or is not convenient to enter an inside of the instrument 70 for inspection. When the electronic device of the present application is used for inspection, the separable camera component 803 can be pulled out from the receiving groove 8010. The separable camera component 803 is fixed under a support of the wired connection component 804. The device main body 801 can be positioned relative to the separable camera component 803 by controlling parameters such as a stretch length and bending radius of the wired connection component 804.

The wired connection component 804 further includes a rotating component 8041. The separable camera component 803 is hinged with the flexible support through the rotating component 8041. The separable camera component 803 includes a camera and a flash (not shown).

When the separable camera component 803 extends into the instrument 70 through the small hole 702, the separable camera component 803 realizes photographing at different angles through the rotating component 8041. The flash can be used to fill light, so as to implement inspection of the component 701 to be inspected inside the instrument 70.

In summary, the display device, the electronic device, and the mobile terminal provided by the present application dispose the wired connection component between the system motherboard and the separable camera component, or adopts a wireless connection between the separable camera component and a main body to replace a traditional fixed camera component by the separable camera component. The separable camera component of the present application can be received in the receiving groove on the main body, and can be taken out of the receiving groove when in use. The separable camera component of the present application can be separated from the main body, so it is flexible to use. This solves problems that limitations of positions and photographing angles of the present display devices, electronic devices, and mobile terminals lead poor user experience and large power consumption of products.

In the above embodiments, descriptions for the embodiments emphasize different aspects, and for a part without being described in detail in a certain embodiment, reference may be made to related descriptions in other embodiments.

The electronic device provided by embodiments of the present application is described in detail above, the specific examples of this document are used to explain principles and embodiments of the present application, and the description of embodiments above is only for helping to understand the present application. Persons of ordinary skill in the art should understand that they may still make modifications to the technical solutions described in the above embodiments or make equivalent replacements to some or all technical features thereof, without departing from the scope of the technical solutions of the embodiments of the present application.

## Claims

1. A display device, comprising a device main body, a display component, and a separable camera component;
wherein the device main body comprises the display component, the device main body is provided with a receiving groove, and the receiving groove receives the separable camera component; and
wherein the separable camera component is in communication with the device main body, and the separable camera component is moveable out of the receiving groove to be separated from the device main body.

2. The display device according to claim 1, wherein the separable camera component is wirelessly connected to the device main body through a wireless module.

3. The display device according to claim 1, wherein the separable camera component is wiredly connected to the device main body through a wired connection component.

4. The display device according to claim 3, wherein the device main body comprises a housing and a system motherboard;
the system motherboard is disposed in the housing, the separable camera component is electrically connected to the system motherboard through the wired connection component, and the system motherboard is electrically connected to the display component;
the receiving groove is disposed on the housing, and the receiving groove receives the wired connection component and the separable camera component; and
the separable camera component is configured to extend from or be received in the receiving groove through the wired connection component, and is configured to be moved and/or rotated in a movable region of the wired connection component.

5. The display device according to claim 4, wherein the separable camera component is configured to change a position and/or a photographing angle in the movable region of the wired connection component by moving and/or twisting of the wired connection component.

6. The display device according to claim 4, wherein the wired connection component comprises a connecting wire and a flexible support, an end of the connecting wire is electrically connected to the system motherboard, and another end of the connecting wire is electrically connected to the separable camera component; and
the flexible support wraps the connecting wire, or the connecting wire is attached on a surface of the flexible support.

7. The display device according to claim 6, wherein the flexible support is a flexible sliding tube, the connecting wire is wrapped in the flexible sliding tube, the separable camera component is configured to extend from or be received in the receiving groove by stretching the flexible sliding tube, and is configured to change a position and/or a photographing angle by bending and/or twisting of the flexible sliding tube.

8. The display device according to claim 7, wherein a stretch length of the flexible sliding tube is less than or equal to a length of the connecting wire.

9. The display device according to claim 6, wherein the wired connection component further comprises a rotating mechanism, the flexible support is connected to the separable camera component through the rotating mechanism, and the separable camera component is configured to in-situ rotate through the rotating mechanism.

10. The display device according to claim 4, wherein the receiving groove comprises a first receiving portion receiving the separable camera component and a second receiving portion receiving the wired connection component, the second receiving portion is disposed between the first receiving portion and the system motherboard, the first receiving portion and the second receiving portion are communicated with each other, and the wired connection component is configured to extend from or be received in the receiving groove through the first receiving portion.

11. An electronic device, comprising a device main body, a display component, and a separable camera component;
wherein the device main body comprises the display component, the device main body is provided with a receiving groove, and the receiving groove receives the separable camera component; and
wherein the separable camera component is in communication with the device main body, and the separable camera component is moveable out of the receiving groove to be separated from the device main body.

12. The electronic device according to claim 11, wherein the separable camera component is wirelessly connected to the device main body through a wireless module; or
the separable camera component is wiredly connected to the device main body through a wired connection component.

13. The electronic device according to claim 12, wherein the device main body further comprises a system motherboard, and the receiving groove receives the wired connection component and the separable camera component;
the separable camera component is electrically connected to the system motherboard through the wired connection component, and the system motherboard is electrically connected to the display component; and
the separable camera component is configured to extend from or be received in the receiving groove through the wired connection component, and is configured to be moved and/or rotated in a movable region of the wired connection component.

14. The electronic device according to claim 13, wherein the separable camera component is configured to change a position and/or a photographing angle in the movable region of the wired connection component by moving and/or twisting of the wired connection component.

15. The electronic device according to claim 13, wherein the wired connection component comprises a connecting wire and a flexible support, an end of the connecting wire is electrically connected to the system motherboard, and another end of the connecting wire is electrically connected to the separable camera component; and
the flexible support wraps the connecting wire, or the connecting wire is attached on a surface of the flexible support.

16. A mobile terminal, comprising a terminal main body, a display component, and a separable camera component;
wherein the terminal main body comprises the display component, the terminal main body is provided with a receiving groove, and the receiving groove receives the separable camera component; and
wherein the separable camera component is in communication with the terminal main body, and the separable camera component is moveable out of the receiving groove to be separated from the terminal main body.

17. The mobile terminal according to claim 16, wherein the separable camera component is wirelessly connected to the terminal main body through a wireless module; or
the separable camera component is wiredly connected to the terminal main body through a wired connection component.

18. The mobile terminal according to claim 17, wherein the terminal main body further comprises a system motherboard, and the receiving groove receives the wired connection component and the separable camera component;
the separable camera component is electrically connected to the system motherboard through the wired connection component, and the system motherboard is electrically connected to the display component; and
the separable camera component is configured to extend from or be received in the receiving groove through the wired connection component, and is configured to be moved and/or rotated in a movable region of the wired connection component.

19. The mobile terminal according to claim 18, wherein the separable camera component is configured to change a position and/or a photographing angle in the movable region of the wired connection component by moving and/or twisting of the wired connection component.

20. The mobile terminal according to claim 18, wherein the wired connection component comprises a connecting wire and a flexible support, an end of the connecting wire is electrically connected to the system motherboard, and another end of the connecting wire is electrically connected to the separable camera component; and
the flexible support wraps the connecting wire, or the connecting wire is attached on a surface of the flexible support.
